# EUROPEAN PATENT APPLICATION

(11) **EP 2 815 805 A1**
(43) Date of publication of application: **24.12.2014**
(21) Application number: 14171144.0
(22) Date of filing: 04.06.2014
(51) Int. Cl.: B01D 61/14, B01D 67/00, B01D 69/02, C02F 1/44, C10G 33/06, B01D 17/00

(54) **Membrane system and method for treating fluid mixtures including aqueous and organic phases**

(30) Priority: 21.06.2013 US 201313924032
(71) Applicant: Pall Corporation, Port Washington, NY 11050 (US)
(72) Inventor: BRANTLEY, John D., Freeville, NY New York 13068 (US); DIETZ, Jacob M., Homer, NY New York 13077 (US)
(74) Representative: Hoeger, Stellrecht & Partner Patentanwälte

(57) **Abstract**

Systems and methods are disclosed for separating a continuous aqueous phase and a discontinuous organic phase from a mixture containing both phases.

## Description

### BACKGROUND OF THE INVENTION

Water, and oil, can be removed from a mixture containing water, oil, and solids. For example, in the alternative fuels market, some companies use a three phase separator to separate the water phase from the oil phase and from the solids phase. Other separation methods include, for example, using one or more centrifuges.

However, conventional separation methods have been inefficient and/or expensive.

The present invention provides for ameliorating at least some of the disadvantages of the prior art. These and other advantages of the present invention will be apparent from the description as set forth below.

### BRIEF SUMMARY OF THE INVENTION

In accordance with an embodiment of the present invention, a system for treating fluids including an aqueous phase and an organic phase is provided, the system comprising a first filter device and a second filter device, the first filter device comprising a housing comprising an inlet, a first outlet, and a second outlet, defining a first fluid flow path between the inlet and the first outlet, and a second fluid flow path between the inlet and the second outlet, and a hydrophilic filter element comprising a porous hydrophilic membrane across the first fluid flow path; and the second filter device comprising a housing comprising an inlet, a first outlet, and a second outlet, defining a first fluid flow path between the inlet and the first outlet, and a second fluid flow path between the inlet and the second outlet, and a hydrophobic filter element across the first fluid flow path. The filter devices can be arranged in series, or in parallel. In one preferred embodiment, the second outlet of the first filter device is in fluid communication with the inlet of the second filter device.

In some embodiments, the hydrophobic filter element comprises a porous hydrophobic membrane. In a preferred embodiment, the hydrophobic filter element comprises a particle-coated porous hydrophilic or particle-coated porous hydrophobic membrane, wherein the particles have a Critical Wetting Surface Tension (CWST) of about 25 dynes/cm (about 2.5 x 10⁻² N/m) or less, typically, a CWST in the range of from about 22 dynes/cm to about 16 dynes/cm (about 2.2 x 10⁻² N/m to about 1.6 x 10⁻² N/m), and the coating is on the upstream surface of the membrane. Preferably, the particles in the coating comprise PTFE particles. Typically, the porous membrane under the coating has a CWST in the range from about 23 dynes/cm to about 78 dynes/cm (about 2.3 x 10⁻² N/m to about 7.8 x 10⁻² N/m).

In another embodiment, a method for treating a fluid mixture comprising a continuous aqueous phase and a discontinuous organic phase (the mixture preferably also comprising a solids phase) is provided.

In one preferred embodiment, the method comprises passing a mixture of a continuous aqueous phase and a discontinuous organic phase into an inlet of a first filter device comprising a housing comprising the inlet, a first outlet, and a second outlet, defining a first fluid flow path between the inlet and the first outlet, and a second fluid flow path between the inlet and the second outlet, wherein a hydrophilic filter element having an upstream surface and a downstream surface is disposed across the first fluid flow path; passing the mixture tangentially to the upstream surface; passing the continuous aqueous phase along the first fluid flow path through the hydrophilic filter element and through the first outlet, and passing an aqueous phase-reduced discontinuous organic phase-containing fluid tangentially to the upstream surface and along the second fluid flow path and through the second outlet through an inlet of a second filter device comprising a housing comprising the inlet, a first outlet, and a second outlet, defining a first fluid flow path between the inlet and the first outlet, and a second fluid flow path between the inlet and the second outlet, wherein a hydrophobic filter element having an upstream surface and a downstream surface is disposed across the first fluid flow path; passing the aqueous phase-reduced discontinuous organic phase-containing fluid tangentially to the upstream surface; passing the discontinuous organic phase along the first fluid flow path through the hydrophobic filter element and through the first outlet, and passing an aqueous phase-reduced discontinuous organic phase-reduced fluid tangentially to the upstream surface and along the second fluid flow path and through the second outlet.

Preferably, at least the discontinuous organic phase passed through the hydrophobic filter element is recovered in suitable condition for further processing, recycling, or disposal.

In another embodiment, wherein the fluid mixture comprises continuous aqueous phase, a discontinuous organic phase, and a solids phase, the method comprises passing the mixture into the inlet of the first filter device, passing the mixture tangentially to the upstream surface; passing the continuous aqueous phase along the first fluid flow path through the hydrophilic filter element and through the first outlet, and passing an aqueous phase-reduced discontinuous organic phase- and solids-containing fluid tangentially to the upstream surface and along the second fluid flow path and through the second outlet through the inlet of the second filter device, passing the aqueous phase-reduced discontinuous organic phase- and solids-containing fluid tangentially to the upstream surface; passing the discontinuous organic phase along the first fluid flow path through the hydrophobic filter element and through the first outlet, and passing an aqueous phase-reduced discontinuous organic phase-reduced solids-containing fluid tangentially to the upstream surface and along the second fluid flow path and through the second outlet.

In some embodiments, the aqueous phase-reduced discontinuous organic phase-reduced fluid passing through the second outlet of the second filter is mixed with new or additional fluid mixture before the new or additional fluid mixture is passed through the inlet of the first filter device. Alternatively, or additionally, the method can include diafiltration, wherein additional fluid is mixed with new or additional fluid mixture before the new or additional fluid mixture is passed through the inlet of the first filter device.

### BRIEF DESCRIPTION OF THE SEVERAL VIEWS OF THE DRAWING(S)

Figure 1 diagrammatically illustrates a system for use in accordance with an embodiment of the invention, wherein the filter devices are arranged in series, and the system also includes an optional diafiltration tank and circuit, and an optional retentate bleed.
Figure 2 diagrammatically illustrates another system for use in accordance with an embodiment of the invention, wherein the filter devices are arranged in series, wherein either of the two filter devices can be arranged first.
Figure 3 illustrates other systems for use in accordance with embodiments of the invention, wherein Figure 3A illustrates a single pump parallel loop, and Figure 3B illustrates a dual pump parallel loop.
Figure 4 is a graph showing the throughputs using a system including first and second filter devices according to an embodiment of the invention, compared to using only a second filter device.
Figure 5 is a graph showing the throughputs using a system including first and second filter devices according to another embodiment of the invention, compared to using only a second filter device.

### DETAILED DESCRIPTION OF THE INVENTION

Advantageously, systems and methods according to the invention can used in separating a high surface energy continuous liquid phase (preferably, an aqueous phase such as water), and a low surface energy discontinuous liquid phase, preferably an organic phase (more preferably oil) from a mixture initially containing both phases.

Additionally, separation of the aqueous phase can provide for maintaining the organic phase concentration, which keeps the organic phase concentration at a desirably high level, and allows oil flux to maintain a high level for a longer period of time.

In accordance with an embodiment of the present invention, a system for treating fluids including an aqueous phase and an organic phase is provided, the system comprising a first filter device and a second filter device, the first filter device comprising a housing comprising an inlet, a first outlet, and a second outlet, defining a first fluid flow path between the inlet and the first outlet, and a second fluid flow path between the inlet and the second outlet, and a hydrophilic filter element comprising a porous hydrophilic membrane across the first fluid flow path; and the second filter device comprising a housing comprising an inlet, a first outlet, and a second outlet, defining a first fluid flow path between the inlet and the first outlet, and a second fluid flow path between the inlet and the second outlet, and a hydrophobic filter element across the first fluid flow path. The filter devices can be arranged in series (with the filter device comprising a hydrophilic filter element upstream of the filter device comprising a hydrophobic filter element, or with the filter device comprising a hydrophobic filter element upstream of the filter device comprising a hydrophilic filter element), or in parallel. In one preferred embodiment, the second outlet of the first filter device is in fluid communication with the inlet of the second filter device.

In some embodiments, the hydrophobic filter element comprises a porous hydrophobic membrane. In other embodiments, the hydrophobic element comprises a particle-coated porous hydrophilic or particle-coated porous hydrophobic membrane, wherein the particles have a Critical Wetting Surface Tension (CWST) of about 25 dynes/cm (about 2.5 x 10⁻² N/m) or less, typically, a CWST in the range of from about 22 dynes/cm to about 16 dynes/cm (about 2.2 x 10⁻² N/m to about 1.6 x 10⁻² N/m). Preferably, the particles in the coating comprise PTFE particles. Typically, the porous membrane under the coating has a CWST in the range from about 23 dynes/cm to about 78 dynes/cm (about 2.3 x 10⁻² N/m to about 7.8 x 10⁻² N/m).

In another embodiment, a method for treating a fluid mixture comprising a continuous aqueous phase and a discontinuous organic phase (the mixture preferably also comprising a solids phase) is provided.

In one preferred embodiment, the method comprises passing a mixture of a continuous aqueous phase and a discontinuous organic phase into an inlet of a first filter device comprising a housing comprising the inlet, a first outlet, and a second outlet, defining a first fluid flow path between the inlet and the first outlet, and a second fluid flow path between the inlet and the second outlet, wherein a hydrophilic filter element having an upstream surface and a downstream surface is disposed across the first fluid flow path; passing the mixture tangentially to the upstream surface; passing the continuous aqueous phase along the first fluid flow path through the hydrophilic filter element and through the first outlet, and passing an aqueous phase-reduced discontinuous organic phase-containing fluid tangentially to the upstream surface and along the second fluid flow path and through the second outlet through an inlet of a second filter device comprising a housing comprising the inlet, a first outlet, and a second outlet, defining a first fluid flow path between the inlet and the first outlet, and a second fluid flow path between the inlet and the second outlet, wherein a hydrophobic filter element having an upstream surface and a downstream surface is disposed across the first fluid flow path; passing the aqueous phase-reduced discontinuous organic phase-containing fluid tangentially to the upstream surface; passing the discontinuous organic phase along the first fluid flow path through the hydrophobic filter element and through the first outlet, and passing an aqueous phase-reduced discontinuous organic phase-reduced fluid tangentially to the upstream surface and along the second fluid flow path and through the second outlet.

Preferably, at least the discontinuous organic phase passed through the hydrophobic filter element is recovered in suitable condition for further processing, recycling, or disposal.

In another embodiment, wherein the fluid mixture comprises continuous aqueous phase, a discontinuous organic phase, and a solids phase, the method comprises passing the mixture into the inlet of the first filter device, passing the mixture tangentially to the upstream surface; passing the continuous aqueous phase along the first fluid flow path through the hydrophilic filter element and through the first outlet, and passing an aqueous phase-reduced discontinuous organic phase- and solids-containing fluid tangentially to the upstream surface and along the second fluid flow path and through the second outlet through the inlet of the second filter device, passing the aqueous phase-reduced discontinuous organic phase- and solids-containing fluid tangentially to the upstream surface; passing the discontinuous organic phase along the first fluid flow path through the hydrophobic filter element and through the first outlet, and passing an aqueous phase-reduced discontinuous organic phase-reduced solids-containing fluid tangentially to the upstream surface and along the second fluid flow path and through the second outlet.

In some embodiments, the aqueous phase-reduced discontinuous organic phase-reduced fluid passing through the second outlet of the second filter is mixed with new (e.g., feed) and/or additional fluid mixture before the new and/or additional fluid mixture is passed through the inlet of the first filter device. Alternatively, or additionally, the method can include diafiltration, wherein diafiltration fluid is mixed with new and/or additional fluid mixture before the new and/or additional fluid mixture is passed through the inlet of the first filter device. In some embodiments, the aqueous phase-reduced discontinuous organic phase-reduced fluid passing through the second outlet of the second filter can be additionally reduced of solids (e.g., via a retentate bleed) before mixing the fluid with diafiltration fluid or new feed fluid and/or additional fluid before the fluid mixture is passed through the inlet of the first filter device.

In another embodiment, the method comprises passing a mixture of a continuous aqueous phase and a discontinuous organic phase into an inlet of a first filter device comprising a housing comprising the inlet, a first outlet, and a second outlet, defining a first fluid flow path between the inlet and the first outlet, and a second fluid flow path between the inlet and the second outlet, wherein a hydrophobic filter element having an upstream surface and a downstream surface is disposed across the first fluid flow path; passing the mixture into the inlet and tangentially to the upstream surface; passing the discontinuous organic phase along the first fluid flow path through the hydrophobic filter element and through the first outlet, and passing a discontinuous organic phase-reduced aqueous phase-containing fluid tangentially to the upstream surface and along the second fluid flow path and through the second outlet and through the inlet of a second filter device comprising a housing comprising the inlet, a first outlet, and a second outlet, defining a first fluid flow path between the inlet and the first outlet, and a second fluid flow path between the inlet and the second outlet, wherein a hydrophilic filter element having an upstream surface and a downstream surface is disposed across the first fluid flow path; passing the discontinuous organic phase-reduced aqueous phase-containing fluid tangentially to the upstream surface; passing the aqueous phase fluid along the first fluid flow path through the hydrophilic filter element and through the first outlet, and passing aqueous phase-reduced discontinuous organic phase-reduced fluid tangentially to the upstream surface and along the second fluid flow path and through the second outlet. In some embodiments, the fluid mixture comprises continuous aqueous phase, a discontinuous organic phase, and a solids phase, and the method comprises passing the mixture into the inlet of the first filter device, passing the mixture tangentially to the upstream surface; wherein the fluid passing tangentially to the upstream surfaces and along the second fluid flow path of the devices and through the second outlets comprises solids, as generally discussed above.

In another embodiment, the method comprises passing a mixture of a continuous aqueous phase and a discontinuous organic phase into an inlet of a first filter device comprising a housing comprising the inlet, a first outlet, and a second outlet, defining a first fluid flow path between the inlet and the first outlet, and a second fluid flow path between the inlet and the second outlet, wherein a hydrophilic filter element having an upstream surface and a downstream surface is disposed across the first fluid flow path; passing the mixture tangentially to the upstream surface; passing the continuous aqueous phase along the first fluid flow path through the hydrophilic filter element and through the first outlet, and passing an aqueous phase-reduced discontinuous organic phase-containing fluid tangentially to the upstream surface and along the second fluid flow path and through the second outlet; and, passing a mixture of a continuous aqueous phase and a discontinuous organic phase into an inlet of a second filter device comprising a housing comprising the inlet, a first outlet, and a second outlet, defining a first fluid flow path between the inlet and the first outlet, and a second fluid flow path between the inlet and the second outlet, wherein a hydrophobic filter element having an upstream surface and a downstream surface is disposed across the first fluid flow path; passing the mixture into the inlet and tangentially to the upstream surface; passing the discontinuous organic phase along the first fluid flow path through the hydrophobic filter element and through the first outlet, and passing a discontinuous organic phase-reduced aqueous phase-containing fluid tangentially to the upstream surface and along the second fluid flow path and through the second outlet. Preferably, the method further comprises passing the aqueous phase-reduced discontinuous organic phase-containing fluid from the second outlet of the first device into a container such as a feed tank, and passing the discontinuous organic phase-reduced aqueous phase-containing fluid from the second outlet of the second device into the container such that the aqueous phase-reduced discontinuous organic phase-containing fluid and the discontinuous organic phase-reduced aqueous phase-containing fluid are combined in the container. If desired, the combination, possibly supplemented with additional fluid (e.g., new and/or additional mixture fluid and/or diafiltration fluid) is subsequently passed into the first and second filter devices as discussed above.

The organic phase may be, for example, in the range of about 5% to about 15% of the initial total volume of the mixture, though the organic phase can be less than 5% of the mixture, or greater than 15% of the mixture. Typically, the solids phase includes small particles, on the order of about 10 microns in diameter or less. The solids phase may be, for example, in the range of about 10% to about 20% of the total volume of the mixture, though the solids phase can be less than 10% of the mixture, or greater than 20% of the mixture.

Without being limited to any particular mechanism, it is believed that, when a hydrophobic filter element comprising a porous membrane, preferably, a hydrophobic filter element comprising a particle coated porous membrane (wherein the particles coat the upstream surface of the membrane), is used in a cross-flow filtration application (particularly wherein the solids particles are larger than the oil droplets), solids are lifted away, and oil droplets are coalesced into a continuous layer and dragged down to the membrane, leading to improved permeation.

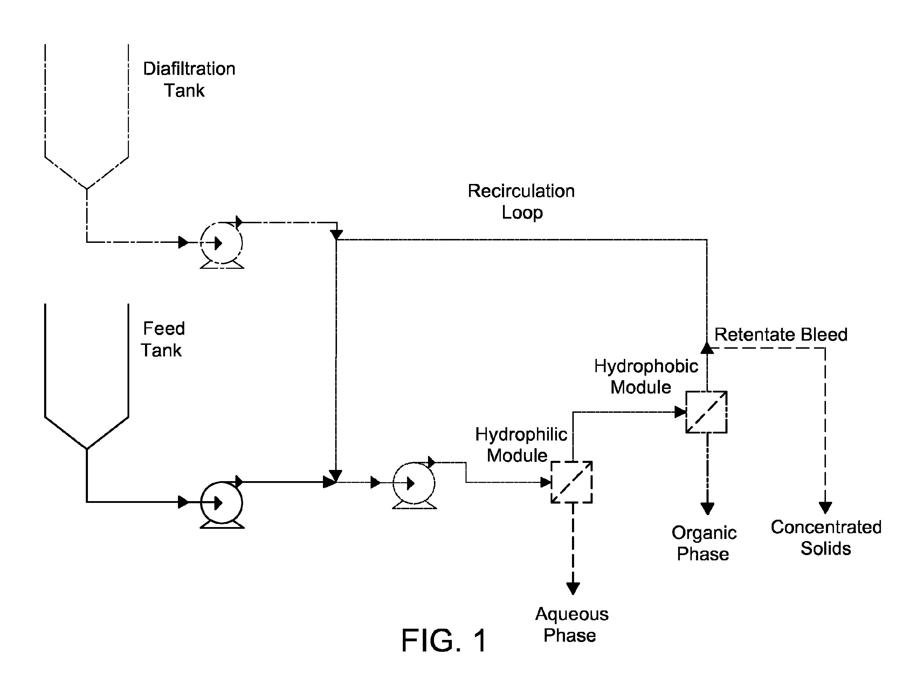

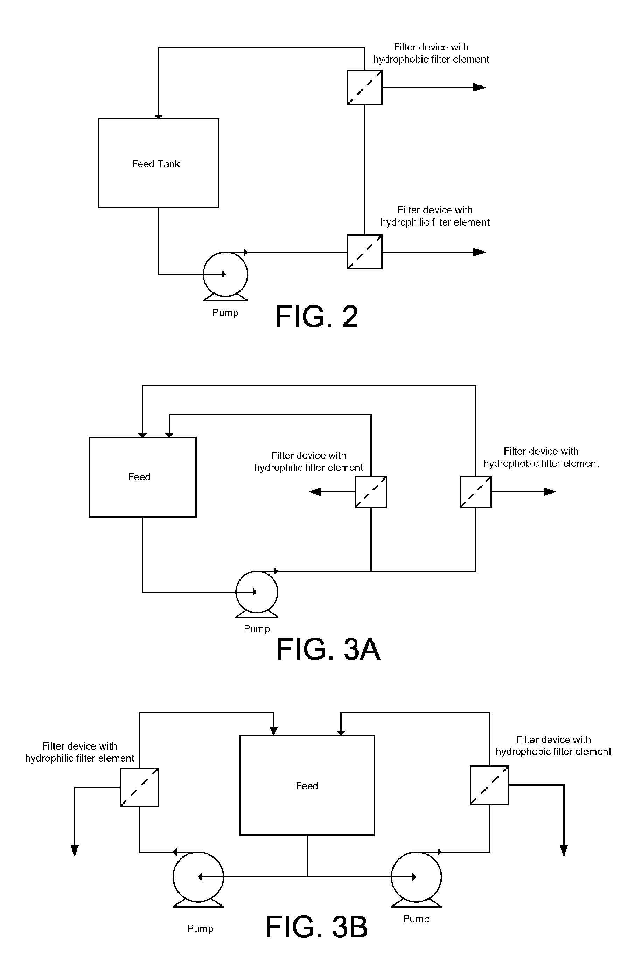

A variety of system configurations are suitable for use in embodiments of the invention, and are known in the art. The filter devices in the system can be arranged in series (e.g., as generally shown in Figures 1 and 2). While the embodiments illustrated in Figures 1 and 2 show the filter device comprising a hydrophilic filter element ("hydrophilic module" in Fig. 1) arranged upstream of the filter device comprising a hydrophobic filter element ("hydrophobic module" in Fig. 1), the filter device comprising a hydrophobic filter element arranged can be arranged upstream of the filter device comprising a hydrophilic filter element. Alternatively, the filter devices can be arranged in the system in parallel, e.g., as shown in Figure 3A (single pump parallel loop) and Figure 3B (double pump parallel loop). As is known in the art, the use of a parallel loop can be desirable in providing different flow rates through the respective filter devices, e.g., by using a single pump and flow control devices (e.g., valves) downstream of the filter device(s), or by using dual pumps (and flow control devices, if desired).

Systems can include additional components, e.g., one or more recirculation loops, a diafiltration tank and circuit, one or more retentate bleeds (e.g., to obtain concentrated solids), and/or one or more additional pumps.

Typically, the systems are operated such that the rates of reduction of the aqueous phase, and of the organic phase, as fluid passes through the respective filter devices, are balanced to maintain, for a desired period of time, a desired general overall concentration. For example, the systems can be operated to maintain a target ratio of oil to water in the feed tank.

A variety of particles (preferably PTFE particles), typically provided with carrier fluids, for example, in particle fluids and sprays, including commercially available particles in liquids and sprays, are suitable for use in the invention. The particle coating can be deposited on the membrane by a variety of techniques known in the art, for example, spray coating, wherein the particles are suspended in liquid droplets sprayed on the membrane as an aerosol, and dip coating, wherein the particles are suspended in a liquid into which the membrane is dipped. Preferably, the particles are suspended in a volatile carrier liquid for application to a surface of the membrane. Suitable volatile carrier liquids include, for example, 1,1,1,2-tetrafluoroethane and methanol. Illustrative suitable sprays, release agents and lubricating agents including PTFE particles are available from, for example, Miller-Stephenson Chemical Company, Inc., SPRAYON (Cleveland, OH), and Chem-Trend L.P. (Howell, MI).

The particles can have any suitable average diameter, and can be applied in any suitable concentration to the surface of the membrane. Typically, the particles have an average diameter in the range of from about 1 microns to about 6 microns (in some embodiments, an average diameter in the range of from about 3 microns to about 6 microns), through particles having larger or smaller average diameters can be suitable for use in accordance with embodiments of the invention. Typically, when applied by a spray gun, the particles are applied at a rate of at least about 0.2 gm/plate, more typically, applied at a rate of at least 0.8 gm/plate.

The particles have a critical wetting surface tension (CWST, as defined in, for example, U.S. Patent 4,925,572) of about 25 dynes/cm (about 2.5 x 10⁻² N/m) or less, preferably, in the range of from about 22 dynes/cm to about 16 dynes/cm (about 2.2 x 10⁻² N/m about 1.6 x 10⁻² N/m).

The membranes can have any desired CWST. The CWST can be selected as is known in the art, e.g., as additionally disclosed in, for example, U.S. Patents 5,152,905, 5,443,743, 5,472,621, and 6,074,869.

Typically, the hydrophilic membrane(s) used in the hydrophilic filter element has/have a CWST of at least about 72 dynes/cm (about 7.2 x 10⁻² N/m).

In those embodiments wherein the hydrophobic filter element comprises at least one porous hydrophobic membrane that lacks a particle coating, the membrane has a CWST of about 25 dynes/cm (about 2.5 x 10⁻² N/m) or less. In those embodiments wherein the hydrophobic filter element comprises at least one porous membrane with a particle coating on the upstream surface of the membrane, the membrane (i.e., under the coating) can be hydrophobic or hydrophilic. Typically, the membrane has a CWST in the range from about 23 dynes/cm (about 2.3 x 10⁻² N/m) to about 78 dynes/cm (about 78 x 10⁻² N/m), but the CWST can be less than less than or greater than those values.

A variety of membranes, preferably, polymeric membranes, are suitable for use in the invention, including commercially available membranes. Suitable polymers include, but are not limited to, perfluorinated polyolefins, such as polytetrafluoroethylene (PTFE), polyolefins (e.g., polypropylene and polymethylpentene), polyesters, polyamides (for example, any nylon, e.g., Nylon 6, 11, 46, 66, and 610), polyimides, sulfones (e.g., polysulfones, including aromatic polysulfones such as, for example, polyethersulfone, bisphenol A polysulfone, polyarylsulfone, and polyphenylsulfone), polyvinylidene halides (including polyvinylidene fluoride (PVDF)), acrylics, polyacrylonitriles, polyaramides, polyarylene oxides and sulfides, and polymers and copolymers made from halogenated olefins and unsaturated nitriles.

Other suitable materials include cellulosic derivatives, such as cellulose acetate, cellulose propionate, cellulose acetate-propionate, cellulose acetate-butyrate, and cellulose butyrate.

Suitable commercially available membranes include, but are not limited to, those available from Pall Corporation under the trademarks SUPOR^{®}, VERSAPOR^{®}, and POSIDYNE^{®}, ULTIPOR N66^{®}, ULTIPOR^{®}, FLUORODYNE^{®}, LOPRODYNE^{®}, CARBOXYDYNE^{®}, IMMUNODYNE^{®}, BIODYNE A^{®}, BIODYNE B^{®}, BIODYNE C^{®}, and MUSTANG^{®}.

The pore structure of the membranes depend on, for example, the composition of the fluid to be treated and/or the size of the organic phase droplets. The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating that reduces or allows the passage therethrough of one or more materials of interest as the fluid is passed through the porous membrane. Typically, the membranes each have an average pore size in the range of about 0.1 to about 0.8 microns, though the average pore size can be larger or smaller than a size in that range.

In accordance with embodiments of the invention, the membranes can have a variety of configurations, including planar, pleated, and/or hollow cylindrical.

One or more membranes are typically disposed in a housing comprising at least one inlet and at least one outlet and defining at least one fluid flow path between the inlet and the outlet, wherein the membrane is across the fluid flow path, to provide a filter device or filter module. In an embodiment, at least one filter device can comprise a housing comprising an inlet and a first outlet, and defining a first fluid flow path between the inlet and the first outlet; and the membrane, the membrane being disposed in the housing across the first fluid flow path.

Preferably, for tangential flow applications, one or membranes are disposed in a housing comprising at least one inlet and at least two outlets and defining at least a first fluid flow path between the inlet and the first outlet, and a second fluid flow path between the inlet and the second outlet, wherein the membrane(s) is/are across the first fluid flow path, to provide a filter module. In an illustrative embodiment, the first and second filter devices each comprise a crossflow filter module, the housing further comprising a second outlet, and defining a second fluid flow path between the inlet and the second outlet, the first outlet comprising a concentrate outlet, and the second outlet comprising a permeate outlet, wherein the membrane is disposed across the first fluid flow path.

The filter devices or modules may be sterilizable. Any housing of suitable shape and providing an inlet and one or more outlets may be employed.

The housing can be fabricated from any suitable rigid impervious material, including any impervious thermoplastic material, which is compatible with the fluid being processed. For example, the housing can be fabricated from a metal, such as stainless steel, or from a polymer, e.g., transparent or translucent polymer, such as an acrylic, polypropylene, polystyrene, or a polycarbonated resin.

The following examples further illustrate the invention but, of course, should not be construed as in any way limiting its scope.

### EXAMPLE 1

This example demonstrates the improved results using a system including first and second filter devices according to an embodiment of the invention, compared to using only a second filter device.

The first filter device is a MICROZA module (Pall Corporation, Port Washington, NY) which contains hydrophilic asymmetric hollow fiber membranes with a 0.1 micron (µm) rating, and the module is arranged to provide inside-out flow. The effective membrane area is 0.12M².

The second filter device includes a single flat sheet membrane. A 0.45 µm ULTIPOR Nylon 6,6 membrane (Pall Corporation, Port Washington, NY) having a CWST of 75-78 dynes/cm is sprayed with polytetrafluoroethylene (PTFE) particles (CWST about 18-20 dynes/cm) suspended in solvent (Miller-Stephenson spray MS-122V; average particle size 6 µm, with a range of 1-20 µm), to provide a particle coating on what will be the upstream surface (the first surface in the device to be contacted by the fluid) of the membrane. The membrane, in the form of a flat sheet, is solvent-bonded to a stainless steel support within a crossflow stainless steel housing, to provide the second filter device. The effective membrane area in the housing is 0.0128M². The coated surface is arranged as the upstream surface of the membrane in the housing.

The system including the first and second filter devices is arranged as generally illustrated in Figure 2.

The test fluid is 90% water (representing a continuous aqueous phase) and 10% hexadecane (representing a dispersed organic phase). The flow rate through each filter device is 9 gallons per minute (GPM).

Based on the amount of hexadecane in the initial feed of test fluid, the maximum throughput that can be reached in these experiments is 253 L/M².

Only hexadecane passes through the second filter devices.

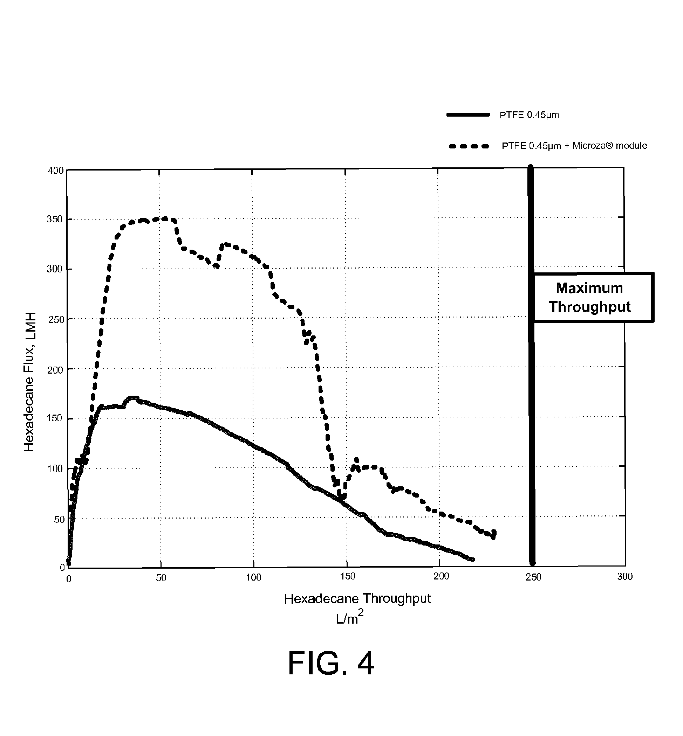

As shown in Figure 4, a graph of the hexadecane throughput in L/M² (X-axis) and the hexadecane flux in liters per meter square per hour (LMH; lm⁻²h⁻¹) (Y-axis) shows that the flux reaches 725 LMH with a total throughput of 253 L/M² for the two filter system according to an embodiment of the invention, whereas the use of only the second filter device shows a flux reaching about 225 LMH with a total throughput of 245 L/M². The graph also shows that for the two filter system, the removal of water during the process maintains the concentration of oil and improves overall performance, as the flux remains high for a longer period.

### EXAMPLE 2

This example demonstrates the improved results using a system including first and second filter devices according to another embodiment of the invention, compared to using only a second filter device.

The first filter device is a MICROZA module (Pall Corporation, Port Washington, NY) which contains hydrophilic asymmetric hollow fiber membranes as described in Example 1.

The second filter device includes a single flat sheet membrane. A 0.45 µm PTFE membrane (CWST 25 dynes/cm; EMFLON, Pall Corporation, East Hills, NY) is sprayed with polytetrafluoroethylene (PTFE) particles as described in Example 1. The membrane, in the form of a flat sheet, is solvent-bonded to a stainless steel support within a crossflow stainless steel housing, to provide the second filter device. The effective membrane area in the housing is 0.0128M². The coated surface is arranged as the upstream surface of the membrane in the housing.

The system including first and second filter devices is arranged as generally illustrated in Figure 2.

The test fluid is 90% water (representing a continuous aqueous phase) and 10% hexadecane (representing a dispersed organic phase). The flow rates through each filter device range from 1.5 to 2GPM.

Based on the amount of hexadecane in the initial feed of test fluid, the maximum throughput that can be reached in these experiments is 253 L/M².

Only hexadecane passes through the second filter devices.

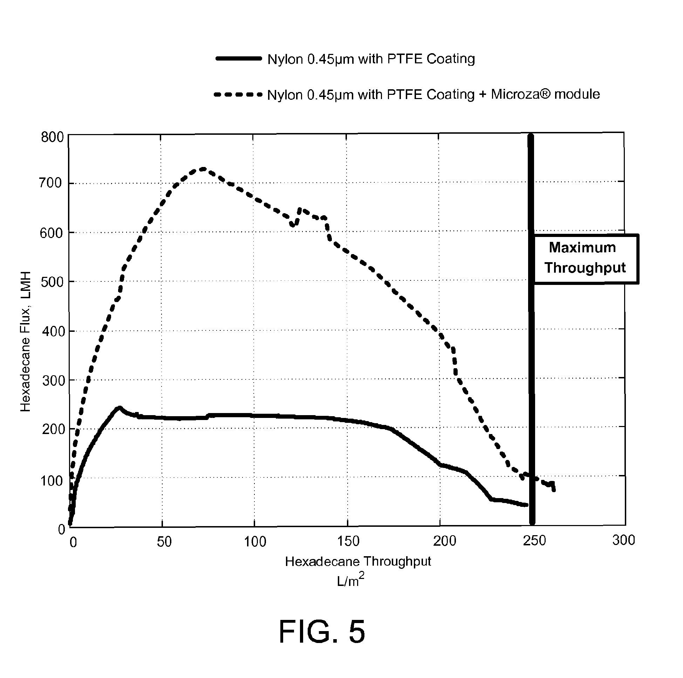

As shown in Figure 5, a graph of the hexadecane throughput in L/M² (X-axis) and the hexadecane flux in liters per meter square per hour (LMH; lm⁻²h⁻¹) (Y-axis) shows that the flux reaches 350 LMH with a total throughput of 240 L/M² for the two filter system according to an embodiment of the invention, whereas the use of only the second filter device shows a flux reaching about 160 LMH with a total throughput of 225 L/M². The graph also shows that for the two filter system, the removal of water during the process maintains the concentration of oil and improves overall performance, as the flux remains high for a longer period.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A system for treating fluids including an organic phase, the system comprising
a first filter device; and,
a second filter device;
the first filter device comprising a housing comprising an inlet, a first outlet, and a second outlet, defining a first fluid flow path between the inlet and the first outlet, and a second fluid flow path between the inlet and the second outlet, and a hydrophilic filter element comprising a porous hydrophilic membrane across the first fluid flow path; and,
the second filter device comprising a housing comprising an inlet, a first outlet, and a second outlet, defining a first fluid flow path between the inlet and the first outlet, and a second fluid flow path between the inlet and the second outlet, and a hydrophobic filter element across the first fluid flow path.

2. The system of claim 1, wherein the first filter device and the second fluid filter device are arranged in parallel.

3. The system of claim 1, wherein the first filter device and the second fluid filter device are arranged in series.

4. The system of any one of claims 1-3, wherein the hydrophobic filter element comprises a porous hydrophobic membrane.

5. The system of any one of claims 1-3, wherein the hydrophobic filter element comprises a particle-coated porous hydrophilic membrane or a particle-coated porous hydrophobic membrane, wherein the particles have a CWST of about 25 dynes/cm (about 2.5 x 10⁻² N/m) or less.

6. A method for treating a fluid mixture comprising a continuous aqueous phase and a discontinuous organic phase, the method comprising:
passing the mixture into an inlet of a first filter device comprising a housing comprising the inlet, a first outlet, and a second outlet, defining a first fluid flow path between the inlet and the first outlet, and a second fluid flow path between the inlet and the second outlet, wherein a hydrophilic filter element having an upstream surface and a downstream surface, and comprising a porous hydrophilic membrane, is disposed across the first fluid flow path;
passing the mixture tangentially to the upstream surface of the hydrophilic filter element;
passing the continuous aqueous phase along the first fluid flow path through the hydrophilic filter element and through the first outlet; and,
passing an aqueous phase-reduced discontinuous organic phase-containing fluid tangentially to the upstream surface of the hydrophilic filter element and along the second fluid flow path and through the second outlet and through an inlet of a second filter device comprising a housing comprising the inlet, a first outlet, and a second outlet, defining a first fluid flow path between the inlet and the first outlet, and a second fluid flow path between the inlet and the second outlet, wherein a hydrophobic filter element having an upstream surface and a downstream surface is disposed across the first fluid flow path;
passing the aqueous phase-reduced discontinuous organic phase-containing fluid tangentially to the upstream surface of the hydrophobic filter element;
passing the discontinuous organic phase along the first fluid flow path through the hydrophobic filter element and through the first outlet; and,
passing an aqueous phase-reduced discontinuous organic phase-reduced fluid tangentially to the upstream surface of the hydrophobic filter element and along the second fluid flow path and through the second outlet.

7. The method of claim 6, wherein the fluid mixture comprises a continuous aqueous phase, a discontinuous organic phase, and a solids phase, the method comprising
passing the mixture into the inlet of the first filter device, passing the mixture tangentially to the upstream surface of the hydrophilic filter element;
passing the continuous aqueous phase along the first fluid flow path through the hydrophilic filter element and through the first outlet; and,
passing an aqueous phase-reduced discontinuous organic phase- and solids-containing fluid tangentially to the upstream surface of the hydrophilic filter element and along the second fluid flow path and through the second outlet through the inlet of the second filter device;
passing the aqueous phase-reduced discontinuous organic phase- and solids-containing fluid tangentially to the upstream surface of the hydrophobic filter element;
passing the discontinuous organic phase along the first fluid flow path through the hydrophobic filter element and through the first outlet; and,
passing an aqueous phase-reduced discontinuous organic phase-reduced solids-containing fluid tangentially to the upstream surface of the hydrophobic filter element and along the second fluid flow path and through the second outlet.

8. The method of claim 6 or 7, further comprising passing the aqueous phase-reduced discontinuous organic phase-reduced fluid from the second outlet of the second filter device and mixing it with new or additional fluid mixture before passing the new or additional fluid mixture into the inlet of the first filter device.

9. The method of any one of claims 6-8, further comprising mixing diafiltration fluid with new or additional fluid mixture before passing the new or additional fluid mixture into the inlet of the first filter device.
